Europäisches Patentamt

European Patent Office

Office européen des brevets

(11) Numéro de publication: **0 206 905 B1**

(12) **FASCICULE DE BREVET EUROPEEN**

(45) Date de publication de fascicule du brevet: **06.07.94** (51) Int. Cl.⁵: **G01N 31/00**

(21) Numéro de dépôt: **86401268.7**

(22) Date de dépôt: **11.06.86**

(54) **Procédé et appareillage de test et d'analyse en ligne permettant d'établir un bilan matière d'une réaction chimique.**

(30) Priorité: **17.06.85 FR 8509136**

(43) Date de publication de la demande:
**30.12.86 Bulletin 86/52**

(45) Mention de la délivrance du brevet:
**06.07.94 Bulletin 94/27**

(84) Etats contractants désignés:
**BE DE FR GB IT NL**

(56) Documents cités:
**EP-A- 0 020 072**
**DE-A- 2 425 227**
**DE-A- 2 714 939**
**FR-A- 2 529 472**
**US-A- 4 099 923**

(73) Titulaire: **INSTITUT FRANCAIS DU PETROLE**
**4, Avenue de Bois Préau**
**F-92502 Rueil-Malmaison(FR)**

(72) Inventeur: **Ajot, Hubert**
**6, rue Henri Dunant**
**F-92500 Rueil Malmaison(FR)**
Inventeur: **Freund, Edouard**
**33, rue Cramail**
**F-92500 Rueil Malmaison(FR)**
Inventeur: **Grandvallet, Pierre**
**Le Pré Genêt Granges/Vologne**
**F-88600 Bruyeres(FR)**

**Description**

L'invention concerne un procédé de test et d'analyse en ligne permettant d'établir un bilan matière complet une réaction chimique, éventuellement en présence de catalyseurs solides, notamment sous forme divisée, permettant de n'utiliser le cas échéant que des quantités faibles de ces catalyseurs et de les mettre en oeuvre dans les procédés classiques de raffinage et/ou de pétrochimie. Il concerne aussi un appareillage pour la mise en oeuvre de ce procédé.

A titre d'exemple, on considérera le cas d'un procédé et d'un appareillage relatifs à une réaction chimique en présence de catalyseur.

Il existe de nombreux types de dispositifs permettant de mesurer l'activité de catalyseurs solides, pour les réactions usuelles rencontrées dans l'industrie du raffinage ou la pétrochimie. Ces mesures sont réalisées dans les conditions suivantes :

- pression comprise entre $10^5$ et $3 \times 10^7$ Pascal ;
- température comprise entre l'ambiante et $750\,°C$ ;
- charge liquide (hydrocarbures, autres composés organiques) et/ou gaz (contenant généralement de l'hydrogène). Le débit de charge, exprimé en volume de charge par unité de catalyseur et par heure (V.V.H.) est généralement compris entre 0,01 et $10^2$, dans le cas d'une charge liquide, entre 10 et $10^5$ dans le cas d'une charge gazeuse ;
- catalyseur solide mis en forme (billes, pastilles, extrudés).

Bien qu'acceptables lorsque l'on désire mesurer l'activité de catalyseurs dans des conditions semblables ou identiques à celles réalisées dans les installations industrielles, les dispositifs existants et notamment ceux fonctionnant à pression supérieure à la pression atmosphérique présentent un certain nombre d'inconvénients :

- les quantités de catalyseur requises sont au minimum de quelques $cm^3$, ce qui peut être rédhibitoire dans le cas d'études exploratives mettant en oeuvre des catalyseurs dont la préparation est difficile ou coûteuse ;
- dans les installations classiques, l'activation et la mise en régime de certains systèmes catalytiques est longue (de quelques heures à plusieurs jours), ce qui est lié d'une part aux dimensions de l'appareillage (inertie thermique et volumes morts élevés) ;
- pour les mêmes raisons, la durée d'un bilan est nécessairement importante, ce qui interdit en général d'étudier de manière détaillée la mise en régime initiale du système catalytique considéré ;
- les installations classiques ne sont en général pas adaptées à une analyse en ligne automatisée à très court temps de réponse (importance des volumes morts, inerties des systèmes de régulation de température et de pression, etc.) ;
- enfin l'automatisation complète d'une installation classique et sa commande à partir d'une console décentralisée est une opération complexe et coûteuse.

Les gains en précision et fiabilité que l'on peut en attendre sont limités pour des raisons intrinsèques (manque de stabilité des catalyseurs sur de longues durées de test) ou extrinsèques (difficultés de s'affranchir de fluctuations dans les réglages des divers paramètres opératoires).

Par ailleurs le brevet US 4,099,923 décrit une unité automatique de présélection de catalyseurs qui permet d'obtenir une indication préliminaire de leur activité potentielle. En outre, la publication allemande DE 2.425.227 décrit un microréacteur automatique pour l'étude de réactions chimiques catalytiques sous pression. Mais aucun de ces documents ne suggère de réaliser un bilan matière complet d'une réaction chimique sous pression en déterminant notamment la mesure du débit en sortie du réacteur, aux conditions de température et de pression élevées de la réaction, mesure qui ne peut être obtenue directement.

Il est également connu et décrit dans le brevet français 2.529.472 un dispositif de test de micro-unité catalytique avec un système de vannes de prélèvement transférées une à une sur un chromatographe en phase gazeuse, ce qui implique l'arrêt du réacteur pour éviter notamment la destruction du catalyseur. Mais ce dispositif ne permet pas de réaliser un bilan matière rigoureux parce qu'il ne dispose pas d'analyse en ligne des effluents, dans les conditions de la réaction sous pression.

Pour parvenir à connaître ce débit en sortie, il est nécessaire de déterminer la composition de l'effluent en sortie du reacteur, aux conditions de température et de pression de la réaction. Un premier objet de l'invention est donc de déterminer la composition volumique de l'effluent en sortie du réacteur aux conditions de température et de pression de la réaction et notamment à des pressions supérieures à la pression atmosphérique.

Un autre objet de l'invention est d'établir à partir de la connaissance de la composition de la charge, de son débit et du débit des effluents en sortie, un bilan matière rigoureux et complet d'une réaction chimique à une pression supérieure à la pression atmosphérique ainsi qu'à des niveaux de pression élevés (par exemple à une pression supérieure à 60 bars).

Un autre objet est de déterminer le bilan matière d'une réaction mettant en jeu de très faibles quantités de catalyseur, de manière répétable, et dans un temps minimum.

Un autre objet de la présente invention est de supprimer les inconvénients précités.

Un autre objet est l'évaluation des propriétés catalytiques de préparations de laboratoire sans qu'une mise en forme particulière soit nécessaire et avec la possibilité de se placer dans des conditions de cinétique initiales et/ou de suivre des mises en régimes ou des désactivations rapides.

Pour répondre à ces objectifs, on propose un procédé de test et d'analyse en ligne permettant notamment d'établir un bilan matière d'une réaction chimique durant un intervalle de temps déterminé dans lequel on introduit dans une zone réactionnelle une charge, de composition et débits connus, comprenant au moins un gaz et/ou au moins un liquide et on chauffe ladite charge à une température et sous une pression de réaction supérieure à la pression atmosphérique dans ladite zone, de façon à obtenir un effluent totalement en phase gazeuse ; le procédé est par ailleurs caractérisé par les étapes successives suivantes :

a) On prélève une aliquote de volume connu dudit effluent auxdites température et pression,

b) On effectue l'analyse deladite aliquote dudit effluent prélevé auxdites température et pression, ladite aliquote contenant au moins un constituant,

c) On effectue une étape de détente jusqu'à la pression atmosphérique, de façon à obtenir un effluent détendu,

d) On prélève une aliquote de volume connu de l'effluent détendu,

e) On effectue l'analyse de ladite aliquote de l'effluent détendu, ladite aliquote contenant au moins en partie ledit gaz et/ou au moins en partie ledit liquide de ladite charge et/ou au moins en partie le constituant présent dans l'aliquote prélevé auxdites température et pression,

f) On mesure le volume total dudit effluent détendu durant ledit intervalle de temps déterminé, et

g) On déduit de la composition et du débit de la charge ainsi que de l'analyse effectuée sur l'effluent prélevé auxdites température et pression de la réaction, de l'analyse de l'aliquote de l'effluent détendu et de la mesure du volume dudit effluent détendu, le bilan matière de ladite réaction chimique.

Par le terme d'analyse, on entend une détermination qualitative et quantitative des effluents, par exemple par un chromatographe en phase gazeuse sur une colonne appropriée (capillaire et/ou remplie). Le chromatographe peut éventuellement être couplé à un spectromètre de masse.

Il peut être intéressant de chauffer la zone réactionnelle jusqu'à une température de 750° C, par exemple.

Le nouvel appareillage, objet de la présente invention, présente de nombreux avantages par rapport aux systèmes existants :

- il est possible de tester avec précision des quantités faibles de catalyseur (jusqu'à quelques dizaines de mg par exemple), sans mise en forme préalable (poudre micrometric le cas échéant). La plupart des échantillons de catalyseurs et notamment des échantillons de laboratoire peuvent donc être étudiés ;

- l'absence d'inertie thermique importante, les faibles volumes morts et l'analyse en ligne (ou avec stockage intermédiaire par exemple en ampoule chauffée) permettent d'étudier les mises en régimes même rapides (moins d'une heure) et d'évaluer de manière détaillée l'activité et la sélectivité d'un catalyseur en quelques heures (au lieu de plusieurs jours) ;

- il est possible de réaliser une régulation rigoureuse (réacteur parfaitement isotherme, pas de perte de charge, absence de fluctuations ou de dérives sur les périodes (courtes) nécessaires pour un test catalytique complet). Par ailleurs par l'automatisation de l'installation décrite dans l'invention, la reproductibilité des tests est très supérieure à celle accessible sur les installations classiques, ce qui permet une comparaison efficace entre catalyseurs d'activité et de sélectivité voisines.

Après l'étape de détente, il peut être particulièrement avantageux de réaliser une étape de condensation (basse pression) qui délivre un condensat que l'on prend en compte dans le bilan matière dans la mesure où il est possible de le peser et de déterminer sa composition. Lorsque les taux de conversion sont élevés (> 10 %), la présence de condensats lourds peut amener à effectuer avant l'étape a) une étape supplémentaire de condensation. Le condensat est analysé qualitativement et quantitativement et on en tient compte dans le bilan matière.

L'invention concerne aussi un dispositif pour la mise en oeuvre de ce procédé, qui comprend la combinaison suivante :

- un réacteur,

- un système d'injection d'une charge, relié audit réacteur,

- des moyens de mesure de débit et de composition de ladite charge,

- un moyen de chauffage dudit réacteur, ce dernier délivrant un effluent totalement en phase gazeuse,
- au moins une vanne d'échantillonnage munie d'organes de chauffage, cette vanne étant reliée à la sortie du réacteur et contenant une aliquote dudit effluent,
- un premier moyen d'analyse tel qu'un chromatographe en phase gazeuse pour l'analyse qualitative et quantitative dudit effluent contenu dans ladite vanne, ce premier moyen d'analyse étant relié à ladite vanne,
- un moyen de détente en sortie du premier moyen d'analyse délivrant un effluent détendu,
- une vanne d'échantillonnage supplémentaire munie d'organe de chauffage pour contenir une aliquote de l'effluent détendu,
- un second moyen d'analyse tel qu'un chromatographe en phase gazeuse pour l'analyse qualitative et quantitative de ladite aliquote de l'effluent détendu, ledit second moyen d'analyse étant connecté à ladite vanne d'échantillonnage supplémentaire,
- un moyen de mesure de volume dudit effluent détendu, connecté à la sortie dudit second moyen d'analyse, et
- des moyens de traitement reliés auxdits moyens de mesure de débit et de composition de la charge, audit moyen de mesure de volume et auxdits premier et second moyens d'analyse, ces moyens de traitement étant adaptés à déterminer un bilan matière à partir des mesures de débit et de composition de la charge, de la mesure de volume et de l'analyse dudit effluent détendu ainsi que de l'analyse de l'effluent totalement en phase gazeuse.

L'ensemble de ces vannes ne prélèvent qu'une quantité infime de produit (quelques microlitres) nécessaire à l'analyse chromatographique.

Selon un autre mode de réalisation, l'appareillage peut comprendre un premier moyen de condensation à la sortie du moyen de détente, ce qui permet d'analyser le condensat et d'analyser l'effluent gazeux détendu non condensé.

Le second moyen d'analyse est généralement le même que le premier moyen d'analyse avec une autre colonne chromatographique et un autre détecteur qui peuvent être identiques à ceux du premier moyen d'analyse.

Selon un autre mode particulier permettant d'analyser l'effluent pour des taux de conversion élevés ( > 10 %), l'appareillage peut comprendre au moins un second moyen de condensation situé entre la sortie du réacteur et les vannes d'échantillonnages.

Les moyens de traitement comprennent un automate programmable adapté à réguler et à régler un ensemble de moyens reliés à l'automate, ces moyens comprenant notamment :

a) les moyens de mesure de débit et de composition de la charge,

b) les moyens de mesure de température du réacteur ainsi que de celle du moyen de chauffage,

c) le moyen de détente et,

d) le premier et le second moyen de condensation.

L'invention sera mieux comprise au vu des figures présentées ci-dessous, parmi lesquelles :

- la figure 1 représente l'appareillage selon l'invention ;
- la figure 2 illustre un schéma des vannes d'échantillonnages et de la zone d'analyse ; et
- la figure 3 montre les moyens de traitement selon l'invention qui coopèrent à la détermination du test et de l'information désirée ;

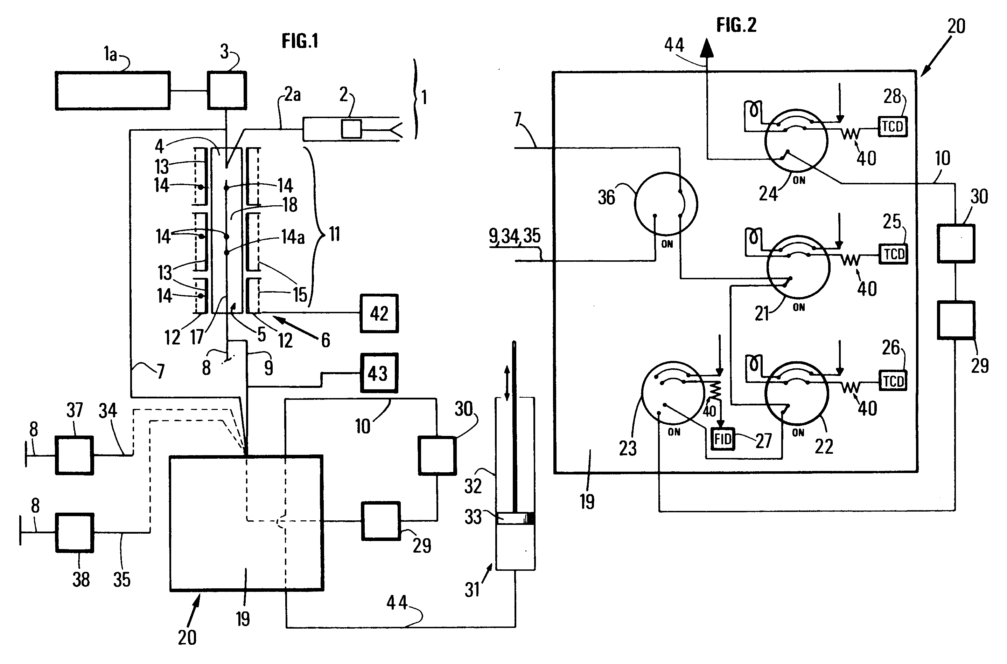

Dans la figure 1 représentant un mode particulier de réalisation, l'appareillage selon la présente invention comprend généralement une zone d'alimentation ou d'injection 1, une zone réactionnelle 11 comportant un ensemble préchauffeur 4 et réacteur 5, une zone d'analyses 20 comprenant un chromatographe en phase gazeuse 19, un ensemble de vannes d' échantillonnage 21-24 (figure 2) et de colonnes chromatographiques spécifiques adaptées à l'analyse à effectuer, un moyen de détente 29 avec ou sans séparateur de phases 30 et un appareil volumétrique 31 de mesure de débits de sortie et de volume total de l'effluent détendu.

Les réactifs constituant la charge et sous forme gazeuse sont injectés par au moins un régulateur de débit massique 1a avec une précision de 1 % et homogénéisés dans un mélangeur 3 alors que les réactifs liquides de la charge sont injectés par une ligne 2a à l'aide d'au moins une pompe seringue 2 à la pression et aux débits désirés (précision de $10^{-3}$ ml pour une gamme de débit de 0,2 à 100 ml/heure).

Le liquide est préchauffé et vaporisé au niveau de la zone supérieure 4 qui constitue le préchauffeur. Ce dernier est constitué d'un doigt métallique qui reçoit un tube fin bobiné en son extrémité inférieure, dont l'extrémité supérieure est située face à l'entrée des gaz. Le liquide vaporisé dans la zone chaude du préchauffeur 4 est directement entraîné par les gaz et l'ensemble est homogénéisé d'une part par la vaporisation continue et l'arrivée conjointes des gaz, la vitesse spatiale étant très grande. L'ensemble est détendu dans une zone de remplissage de matière inerte (grains de quartz par exemple).

A la sortie du préchauffeur 4 se situe le réacteur proprement dit 5 de forme tubulaire qui peut être chauffé comme le préchauffeur jusqu'à une température de 750° C par un moyen de chauffage tel qu'un four 6 à très faible inertie thermique. Ce dernier comporte en effet deux demi-coquilles cylindriques 12 contenant les résistances 13, les thermocouples de régulation 14 et de contrôle 14a ainsi que des ailettes extérieures métalliques 15 assurant la ventilation ou le refroidissement du réacteur.

Les résistances sont très proches du réacteur (1 mm environ) et elles sont du type blindées, brasées sous vide dans des rainures longitudinales ou fixées sur les demi-coquilles cylindriques par projection de métal en fusion (méthode shoopage). Par ailleurs, aucun matériau réfractaire entre les demi-coquilles et le réacteur n'entrave la dissipation des calories excédentaires. L'ensemble four-réacteur est programmé et régulé automatiquement par des moyens de programmation et de régulation 42.

Le réacteur 5 (10 mm de diamètre intérieur) comporte sensiblement suivant son axe longitudinal une canne pyrométrique 17 (environ 3 mm de diamètre extérieur) où sont disposés les thermocouples 14 de régulation et 14a de contrôle. Suivant un mode préféré, les thermocouples de régulation sur les résistances 13 sont sensiblement au même niveau que ceux disposés sur le réacteur.

Le four est par ailleurs usiné dans de l'acier réfractaire type Incoloy 800 (750° C), le réacteur et la canne pyrométrique 17 qu'il contient sont en acier spécial de même type, éventuellement gainé or et étanche à la diffusion.

La zone réactionnelle 18 proprement dite faisant directement suite au préchauffeur 4 est constituée par l'espace annulaire entre la paroi du réacteur et la canne 17.

L'effluent de la réaction est dirigé vers la zone d'analyse 20 grâce à un raccord en forme de T 8 en sortie du réacteur qui reçoit la canne pyrométrique 17 et grâce à une ligne à faible volume mort (diamètre inférieur : 0,57 mm par exemple) chauffée 9 et régulée par des moyens de régulation 43. L'effluent est donc toujours à la température et à la pression de la réaction. La zone d'analyse 20 est constituée d'un chromatographe en phase gazeuse 19 (premier moyen d'analyse) comprenant des vannes d'échantillonnage adaptées à travailler en pression et en température ; 21, 22, 23, fig. 2) disposées en série dont le nombre varie en fonction du type de constituants à analyser, par exemple de 2 à 8 et qui sont capables d'isoler dans une capacité de volume connu, une certaine quantité d'effluents qui sera analysée conjointement sur les diverses colonnes chromatographiques (40 représentées sur la figure 2) équipées de détecteurs différents (25, 26, 27, figure 2). C'est ainsi que, par exemple, l'analyseur en ligne comprenant un mélange d'hydrogène, d'eau et d'alcool aliphatiques comprend trois vannes 21, 22 et 23 et trois colonnes (remplies ou capillaires) dont deux équipées d'un détecteur à conductivité thermique 25 et 26 et la troisième d'un détecteur à ionisation de flamme 27 comme le montre la figure 2.

A la sortie des vannes d'échantillonnage, l'effluent est dirigé comme il est sous pression, sur un moyen de détente 29 qui comprend un capteur de pression couplé à une vanne électromagnétique (type BROOKS) qui régule à la pression de la réaction et détend l'effluent à la pression atmosphérique. Eventuellement, suivant un autre mode de réalisation, une phase liquide qui a pu apparaître lors de la détente est séparée grâce à un premier moyen de condensation ou séparateur basse pression 30 et analysé séparément par simple pesée et chromatographie. L'effluent gazeux à pression atmosphérique est ensuite dirigé par une ligne 10 vers une vanne d'échantillonnage supplémentaire à pression atmosphérique 24. Cette vanne est montée en série et est munie d'éléments de chauffage. L'effluent circule dans une autre colonne de chromatographe 19 (second moyen d'analyse) où la réponse est fournie par un détecteur 28 à conductivité thermique ou à ionisation de flamme suivant la nécessité. Cette dernière analyse permet par comparaison avec l'analyse réalisée en sortie de réacteur de remonter au débit gazeux en sortie de réacteur et donc de calculer les bilans matière de manière rigoureuse. A la sortie du chromatographe, ce même effluent gazeux à pression atmosphérique est dirigé par une ligne 44 vers un moyen de mesure de volume de l'effluent détendu 31 constitué d'un cylindre 32 équipé d'un piston étanche 33 à joint de mercure, actionné par un moto-réducteur (non représenté sur la figure 1) lui-même couplé à un capteur différentiel. Pour une faible variation de pression dans le cylindre (35 mbar) le capteur déclenche le déplacement du piston. On peut ainsi suivre le débit de gaz détendu en sortie du réacteur.

Le calcul d'un bilan matière implique la connaissance du débit volumique de la charge et de sa composition à l'entrée du réacteur, ainsi que le débit volumique et la composition de l'effluent à la sortie du réacteur aux conditions de température et de pression de la réaction.

On s'arrange généralement pour que les analyses (par exemple, une analyse des constituants de l'effluent aux conditions de température et de pression de la réaction et l'analyse de l'effluent détendu) comprennent au moins un constituant commun qui permet la liaison entre au moins deux analyses et pour déterminer la composition volumique de l'effluent en sortie du réacteur.

A partir de la différence entre le débit d'entrée et le débit de sortie de l'effluent détendu correspondant au volume de gaz qui a réagi et de la composition volumique ainsi obtenue, on peut déterminer par référence à la composition et au débit de la charge le bilan matière de la réaction.

A partir de la composition volumique aux conditions de la réaction, et du débit volumique à la sortie du réacteur, on détermine selon des calculs connus de l'Homme de métier le poids moléculaire moyen de l'effluent, donc sa masse, et on en déduit le poids des effluents de sortie que l'on compare au poids de la charge à l'entrée pour déterminer le bilan matière, ce qui conduit à un bilan massique. On peut également exprimer le bilan, de manière différente : bilans carbone, hydrogène, oxygène, comme dans les exemples ci-dessous.

Dans le cas où l'on souhaite contrôler parfaitement la composition du mélange gazeux constituant la charge, issu du mélangeur 3, on peut, suivant un autre mode de réalisation, injecter par une ligne 7 ce mélange gazeux qui va alors passer par une vanne 3 voies (figure 2) et par les vannes d'échantillonnages 21, 22 et 23, permettant l'analyse sur les colonnes chromatographiques spécifiques. Suivant ce cas, la vanne 3 voies 36 permettra donc de diriger la charge avant réaction (ligne 7) ou l'effluent gazeux après réaction (lignes 9, 34, 35, figure 2) sur l'analyseur en ligne.

Suivant un mode de réalisation avantageux lorsqu'on a affaire à des forts taux de conversion (par exemple supérieurs à 10 %) qui permettent d'obtenir des effluents plus lourds, le présent dispositif peut être équipé d'un second moyen de condensation ou séparateur haute pression 37 à la sortie du réacteur 5, dans lequel les constituants lourds sont condensés à la température souhaitée, leur niveau liquide est régulé par un capteur différentiel (non représenté) couplé à une microvanne motorisée. La phase liquide ainsi recueillie est analysée séparément par pesée et chromatographie, tandis que la phase gazeuse est directement injectée par une ligne 34 et la vanne 3 voies 36 dans le circuit de vannes 21, 22, 23 et 24 de la zone d'analyse et analysée comme précédemment.

Enfin, suivant un dernier mode de réalisation, lors d'études de cinétique initiale où l'on examine à des intervalles de temps rapprochés l'évolution de la conversion, des vannes de prélèvement 38 peuvent être insérées entre la sortie du réacteur 5 et la zone d'analyse 20 et peuvent permettre de prélever et d'isoler l'effluent aux conditions de température et de pression de la réaction, qui est ensuite transféré au moment voulu par une ligne 35 vers la zone d'analyse tandis que l'effluent gazeux non piégé est analysé comme précédemment.

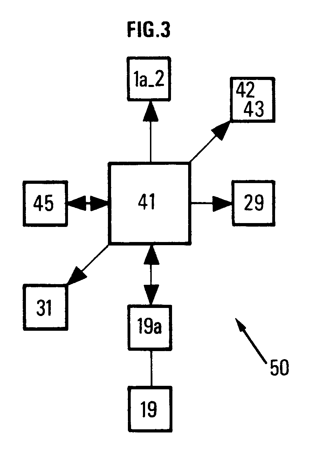

Les moyens de traitement 50 (figure 3) comprennent notamment un automate programmable 41 (type PB 400 de Merlin Gerlin) pour réguler et régler un ensemble de moyens reliés audit automate, les moyens comprenant des moyens de mesure 1a, 2 de débits d'entrée de la charge (liquide et/ou gazeux), des moyens de mesure 42,43 de température de l' ensemble four-réacteur et des lignes, des moyens de détente 29 ainsi que le premier 30 et le second moyen de condensation 37. Il permet en outre le contrôle et la mise en marche du moyen de mesure du volume 31 de l'effluent détendu. De plus, l'automate est couplé directement au chromatographe (moyens d'analyse 19) lui-même programmé pour exécuter les analyses ainsi que la commande des vannes, et équipé d'un calculateur 19a lui-même relié à l'automate pour le dialogue (par exemple paramètre de dialogue : conversion). Enfin, l'automate gère les différentes sécurités (température limite, fuite d'inflammables ou toxiques) 45.

On ne sortirait pas du cadre de la présente invention en faisant intervenir à la sortie de l'appareil volumétrique 31 un autre appareil de mesure (UV, IR ou spectromètre de masse par exemple).

Ce système, objet de la présente invention, peut être utilisé pour de multiples applications, notamment :

A) en raffinage :
- craquage catalytique
- hydrocraquage
- reforming
- hydroisomérisation
- hydrogénation

B) en pétrochimie :
- transformation des aromatiques (isomérisation, dismutation, hydrodéalkylation),
- oxydations diverses (oxydation du toluène en benzaldéhyde, du méthanol en formol).

C) en chimie $CO + H_2$ (traitement des gaz de synthèse)
- synthèse du méthanol,
- conversion du méthanol en hydrocarbures
- conversion du $CO + H_2$ en alcools supérieurs.

La présente invention est notamment très utile pour suivre la mise en régime d'un catalyseur.

Les exemples suivants illustrent l'invention :

Exemple 1

Il concerne l'étude cinétique de la synthèse d'alcools à partir de $H_2$ et de CO sur un catalyseur aluminate de zinc dopé au cuivre et au cobalt, alcalinisé par NaOH.

Ce catalyseur a été mis en régime pendant 20 heures après une réduction à 500° C par l'hydrogène.

Un volume connu de la charge, généralement égal à 16 microlitres ($16 \times 10^{-6}$ l) est prélevé par la vanne d'échantillonnage 21 et dirigé sur une colonne chromatographique de tamis moléculaire 13 X (80-100 mesh) de longueur 3 mètres, de diamètre intérieur 2 mm, chauffée à 70° C en isotherme.

Les constituants de la charge une fois séparés sont détectés par un détecteur à conductivité thermique (TCD) ; ils sont dans un rapport volumétrique $H_2$/CO égal à 2.

Le débit volumique à l'entrée du réacteur à température et pression normale (T, P, N) est de 1,55 l/h.

On introduit dans le réacteur la charge de composition déterminée dont le volume par unité de poids de catalyseur et par heure VPH est de 600 ml/g/h, et le catalyseur (0,1 g, granulométrie $100 \times 10^{-6}$ m).

Les conditions de la réaction sont les suivantes :

| T : 280° C | P = $7 \times 10^6$ Pa. |
|---|---|

Les effluents de la réaction sont analysés immédiatement par le chromatographe en phase gazeuse aux conditions de la réaction après qu'un volume connu de 16 microlitres (TPN) ($16 \times 10^{-6}$ l) ait été prélevé dans les vannes 21, 22 et 23 aux conditions de la réaction.

Les effluents $H_2$, CO sont analysés à partir de la vanne 21 comme précédemment (tableau 1).

Tableau 1

| Composés | Composition volume % |
|---|---|
| $H_2$ | 67,10 |
| CO | 32,90 |

Les effluents CO, $CO_2$, $H_2O$, $C_1OH$, DME et $CH_4$ sont analysés à partir de la vanne 22 sur une colonne de Chromosorb 102 (80-100 mesh) de longueur 3 m et de diamètre intérieur 2 mm à 70° C en isotherme, associée à un détecteur à conductivité thermique (tableau 2).

Tableau 2

| Composés | Composition volume % |
|---|---|
| CO | 92,47 |
| $CO_2$ | 2,93 |
| $H_2O$ | 0,69 |
| DME | 0,06 |
| $CH_4$ | 1,97 |
| $C_1OH$ | 1,88 |

Les effluents $CH_4$, hydrocarbures $C_2$ à $C_{10}$, $C_1OH$, $C_2OH$, $C_3OH$ etc... sont analysés à partir de la vanne 23 sur une colonne chromatographique capillaire SIL 8 de 50 m de longueur, de 0,22 mm de diamètre intérieur, d'épaisseur de phase $0,12 \times 10^{-6}$ m et à une température programmée de 20° C à 250° C, associée à un détecteur à ionisation de flamme (tableau 3).

Tableau 3

| Composés | Composition volume % |
|---|---|
| DME | 1,22 |
| $CH_4$ | 41,46 |
| hydrocarbures $C_2$ à $C_{10}$ | 11,58 |
| $C_1OH$ | 39,63 |
| $C_2OH$ | 4,88 |
| $C_3OH$ | 1,23 |

Après analyse aux conditions de la réaction, l'effluent est détendu à la pression atmosphérique. On prélève par la vanne 24 un volume connu de 100 microlitres (100 X $10^{-6}$ l) (T, P, N) et on analyse l'aliquote de l'effluent sur une colonne de tamis moléculaire 13 X identique à la précédente (tableau 4).

Tableau 4

| Composés | Composition volume % |
|---|---|
| $H_2$ | 67,13 |
| CO | 32,87 |

A partir d'un constituant commun aux analyses de l'effluent détendu et de l'effluent aux conditions de la réaction, CO par exemple choisi dans le tableau 4 et dans le tableau 2, on peut calculer un paramètre correspondant par exemple à l'hydrogène résultant d'une autre analyse, celle présentée dans le tableau 2 et ainsi de suite pour tous les autres constituants.

On calcule ainsi la composition volumique du mélange aux conditions de la réaction qui est présentée dans le tableau 5 essai 1.

Tableau 5

| Composés | Composition volume % | | |
|---|---|---|---|
| | 1 | 2 | 3 |
| $H_2$ | 65,19 | 65,26 | 65,45 |
| CO | 31,92 | 31,93 | 31,60 |
| $CO_2$ | 1,01 | 1,02 | 1,00 |
| $H_2O$ | 0,24 | 0,20 | 0,25 |
| DME | 0,02 | 0,01 | 0,01 |
| $CH_4$ | 0,68 | 0,69 | 0,70 |
| $C_2$ à $C_{10}$ (hydrocarbures) | 0,19 | 0,18 | 0,19 |
| $C_1OH$ | 0,65 | 0,64 | 0,70 |
| $C_2OH$ | 0,08 | 0,06 | 0,08 |
| $C_3OH$ | 0,02 | 0,01 | 0,02 |

A partir du débit volumique de l'effluent détendu mesuré aux conditions de température et de pression normale et égal à 1,42 l/h, de la composition volumique aux conditions de la réaction, de la composition de la charge et de son débit volumique, on en déduit le bilan matière dont les erreurs sont les suivantes :

| bilan masse | | - 0,41 % |
|---|---|---|
| rapport | C/H | 1,56 % |
| | C/O | 0,40 % |
| | O/H | 1,15 % |
| bilan | carbone | - 1,21 x 10$^{-2}$ % |
| | hydrogène | - 1,55 % |
| | oxygène | - 0,41 % |

Un test de reproductibilité portant sur trois bilans de conversion moyenne (8,86 %) réalisé dans les mêmes conditions que cet exemple 1 avec le même lot de catalyseur est présenté dans le tableau 5.

Les erreurs sur le bilan masse (C, H, O) sont sensiblement les mêmes dans les trois cas. La durée de la détermination du bilan est d'environ 30 minutes à 1 heure.

Quand on effectue la réaction dans une unité de développement de test catalytique avec le même catalyseur de l'exemple 1 et quand on calcule le bilan à partir des échantillons prélevés sur l'unité, on obtient une marge d'erreur du bilan de l'ordre de 5 % pour un taux de conversion comparable à celui de l'exemple 1.

Exemple 2

On répète l'exemple 1 avec le même catalyseur mis en régime pendant 10 heures après une réduction à l'hydrogène à 500° C.

Les conditions opératoires restent les mêmes, sauf :

VPH = 18000 ml/g/h

débit volumique à l'entrée (TPN) : 4,60 l/h.

Les résultats analytiques pour un faible taux de conversion sont présentés dans le tableau 6.

Tableau 6

| Composés | Composition Vol. % |
|---|---|
| $H_2$ | 66,85 |
| CO | 32,63 |
| $CO_2$ | 0,18 |
| $CH_4$ | 0,08 |
| $C_2H_6$, $C_3H_8$, $C_4H_{10}$ | 0,02 |
| $C_1OH$ | 0,24 |
| $C_2OH$ | 0,003 |

La conversion obtenue est de : 2,16 %. Le débit volumique de l'effluent détendu est de : 4,49 l/h. Les erreurs sur le bilan sont les suivantes :

| bilan masse | - 0,21 % |
|---|---|
| C/H | - 1,80 % |
| C/O | - 0,19 % |
| O/H | - 1,59 % |
| bilan Carbone | - 0,5 % |
| $H_2$ | + 1,27 % |
| $O_2$ | - 0,34 % |

Ces résultats avec la précision ci-dessus ne peuvent être obtenus sur une unité conventionnelle de développement de test catalytique avec un taux de conversion aussi faible.

Exemple 3

On répète l'exemple 1, les conditions opératoires restant les mêmes (le débit volumique d'entrée variant très légèrement : 1,50 l/h, mais la fraction liquide des effluents est recueillie grâce à un séparateur haute pression, pesée et analysée par chromatographie en phase gazeuse de manière indépendante, la phase non condensée étant soumise aux mêmes analyses que celle de l'exemple 1.

Les compositions volumiques sont présentées dans le tableau 7.

### Tableau 7

| Composés | Composition Volumique % | |
|---|---|---|
| | 1 non condensé | 2 condensé |
| $H_2$ | 65,20· | 65,00 |
| CO | 31,90 | 32,00 |
| $CO_2$ | 1,00 | 1,04 |
| $H_2O$ | 0,24 | 0,25 |
| DME | 0,02 | 0,02 |
| $CH_4$ | 0,68 | 0,70 |
| $C_2$, $C_4$ | 0,15 | 0,14 |
| $C_5$ à $C_{10}$ | 0,05 | 0,05 |
| $C_1OH$ | 0,66 | Con-densés 0,70 |
| $C_2OH$ | 0,08 | 0,08 |
| $C_3OH$ | 0,02 | 0,02 |

La conversion obtenue est de 9 %.

Le débit volumique de l'effluent détendu est de 1,36 l/h. Les erreurs sur le bilan sont les suivantes :

| bilan masse | | - 0,4 % |
|---|---|---|
| rapport | C/H | + 1,5 % |
| | C/O | + 0,40 % |
| | O/H | + 1 % |
| bilan | Carbone | - 0,02 % |
| | Hydrogène | - 1,40 % |
| | Oxygène | - 0,40 % |

## Revendications

1. Procédé de test et d'analyse en ligne permettant d'établir un bilan matière d'une réaction chimique durant un intervalle de temps déterminé, dans lequel on introduit dans une zone réactionnelle une charge de composition et débit connus comprenant au moins un gaz et/ou au moins un liquide, on chauffe ladite charge à une température et sous une pression de réaction supérieure à la pression atmosphérique dans ladite zone de façon à obtenir un effluent totalement en phase gazeuse, le procédé étant caractérisé par les étapes successives suivantes :

a) On prélève une aliquote de volume connu dudit effluent auxdites température et pression,

b) On effectue l'analyse deladite aliquote dudit effluent prélevé auxdites température et pression, ladite aliquote contenant au moins un constituant,

c) On effectue une étape de détente jusqu'à la pression atmosphérique de façon à obtenir un effluent détendu,

d) On prélève une aliquote de volume connu de l'effluent détendu,

e) On effectue l'analyse de ladite aliquote de l'effluent détendu, ladite aliquote contenant au moins en partie ledit gaz et/ou au moins en partie ledit liquide de ladite charge et/ou au moins en partie le constituant présent dans l'aliquote prélevé auxdites température et pression,

f) On mesure le volume total dudit effluent détendu durant ledit intervalle de temps déterminé, et

g) On déduit de la composition et du débit de la charge ainsi que de l'analyse effectuée sur l'effluent prélevé auxdites température et pression de la réaction, de l'analyse de l'aliquote de l'effluent détendu et de la mesure du volume dudit effluent détendu, le bilan matière de ladite réaction chimique.

2. Procédé selon la revendication 1, caractérisé en ce qu'on effectue après l'étape de détente, une étape de condensation délivrant un condensat que l'on prend en compte dans le bilan matière.

3. Procédé selon l'une quelconque des revendications 1 à 2, caractérisé en ce qu'on effectue avant l'étape a) une étape supplémentaire de condensation délivrant un condensat que l'on analyse qualitativement et quantitativement.

4. Appareillage de test et d'analyse en ligne pour la mise en oeuvre du procédé selon la revendication 1 caractérisé par la combinaison suivante :
   - un réacteur (5),
   - un système d'injection (1) d'une charge, relié audit réacteur,
   - des moyens de mesure (1a, 2), de débit et de composition de ladite charge,
   - un moyen de chauffage (6) dudit réacteur, ce dernier délivrant un effluent totalement en phase gazeuse,
   - au moins une vanne d'échantillonnage (21) munie d'organes de chauffage, cette vanne étant reliée à la sortie du réacteur (5) et contenant une aliquote dudit effluent,
   - un premier moyen d'analyse (19) tel qu'un chromatographe en phase gazeuse pour l'analyse qualitative et quantitative dudit effluent contenu dans ladite vanne, ce premier moyen d'analyse étant relié à ladite vanne,
   - un moyen de détente (29) en sortie du premier moyen d'analyse (19) délivrant un effluent détendu,
   - une vanne d'échantillonnage supplémentaire (24) munie d'organe de chauffage pour contenir une aliquote de l'effluent détendu,
   - un second moyen d'analyse (19, 28) tel qu'un chromatographe en phase gazeuse pour l'analyse qualitative et quantitative de ladite aliquote de l'effluent détendu, ledit second moyen d'analyse étant connecté à ladite vanne d'échantillonnage supplémentaire,
   - un moyen de mesure de volume (31) dudit effluent détendu, connecté à la sortie dudit second moyen d'analyse (19, 28), et
   - des moyens de traitement (50) reliés auxdits moyens de mesure de débit (1a, 2) et de composition de la charge, audit moyen de mesure de volume (31) et auxdits premier et second moyens d'analyse (19 et 19, 28), ces moyens de traitement étant adaptés à déterminer un bilan matière à partir des mesures de débit et de composition de la charge, de la mesure de volume et de l'analyse dudit effluent détendu ainsi que de l'analyse de l'effluent totalement en phase gazeuse.

5. Appareillage selon la revendication 4, caractérisé en ce qu'il comprend un premier moyen de condensation (30) situé entre le moyen de détente (29) et le second moyen d'analyse (19, 28) de l'effluent détendu.

6. Appareillage selon l'une quelconque des revendications 4 ou 5 caractérisé en ce qu'il comprend au moins un second moyen de condensation (37) situé entre la sortie du réacteur (5) et les vannes d'échantillonnage (21 et 24).

**7.** Appareillage selon l'une quelconque des revendications 4 à 6 caractérisé en ce que les moyens de traitement (50) comprennent un automate programmable adapté à réguler et à régler un ensemble de moyens reliés audit automate (41), lesdits moyens comprenant :

a) des moyens de mesure (1a, 2) de débit et de composition de la charge,

b) des moyens de mesure (42, 43) de température du réacteur (5) ainsi que du moyen de chauffage (6),

c) des moyens de détente (29),

d) le premier (30) et le second moyen de condensation (37), et

e) des moyens de sécurité (45).

**Claims**

**1.** On-line test and analysis process making it possible particularly to establish a material balance of a chemical reaction during a determined period in which there is introduced into a reaction zone a charge of known composition and flow comprising at least a gas and/or at least a liquid and said charge is heated to a temperature and under a reaction pressure above atmospheric pressure in said zone to obtain an effluent totally in the gas phase, the process comprising the following successive steps :

a) an aliquot of known volume of said effluent is sampled at said temperature and pressure,

b) an analysis is made of said aliquot of said effluent sampled at said temperature and pressure, said aliquot containing at least one constituent,

c) an expansion step to atmospheric pressure is performed to obtain an expanded effluent,

d) an aliquot of known volume of the expanded effluent is sampled,

e) an analysis is made of said aliquot of the expanded effluent, said aliquot containing at least in part said gas and/or at least in part said liquid of said charge and/or at least in part the constituent present in the sampled aliquot at said temperature and pressure,

f) the total volume of said expanded effluent is measured during said determined period, and

g) the material balance of said chemical reaction is calculated from the composition and flow of the charge as well as from the analysis made on said aliquot of the effluent sampled at said reaction temperature and pressure, from the analysis of said aliquot of the expanded effluent and measurement of the volume of said expanded effluent.

**2.** Process according to claim 1, wherein, after the expansion step, a condensation step is performed delivering a condensate which is taken into account in the material balance.

**3.** Process according to any one of claims 1 to 2, wherein before step a) an additional condensation step is performed delivering a condensate which is qualitatively and quantitatively analyzed.

**4.** On-line test and analysis equipment for using the process according to claim 1 characterized by the following combination:

-- a reactor (5),

-- a system (1) for injection of a charge, connected to said reaction,

-- means (1a, 2) for measuring the flow and composition of said charge,

-- a means (6) for heating said reactor, this latter delivering an effluent totally in gas phase,

-- at least a sampling valve (21) provided with heating elements, this valve being connected to the output of reactor (5) and containing an aliquot of said effluent,

-- a first analysis means (19) such as a gas chromatograph for qualitative and quantitative analysis of said effluent contained in said valve, this first analysis means being connected to said valve,

-- an expansion means (29) at the output of the first analysis means (19) delivering an expanded effluent,

-- an additional sampling valve (24) provided with a heating element to contain an aliquot of the expanded effluent,

-- a second analysis means (19, 28) such as a gas chromatograph for qualitative and quantitative analysis of said aliquot of the expanded effluent, said second analysis means being connected to said additional sampling valve,

-- a means (31) for measuring the volume of said expanded effluent, connected to the output of said second analysis means (19, 28), and

-- processing means (50) connected to said means (1a, 2) for measuring the flow and composition of the charge, to said means for measuring the volume (31) and to said first and second analysis means (19 and 19, 28), these processing means being suitable for determining a material balance from the measurements of flow and composition of the charge, from the measurement of volume and from the analysis of said expanded effluent as well as from the analysis of the effluent totally in gas phase.

5. Equipment according to claim 4, wherein it comprises a first condensation means (30) located between expansion means (29) and second analysis means (19, 28) of the expanded effluent.

6. Equipment according to any one of claims 4 or 5, wherein it comprises at least a second condensation means (37) located between the output of reactor (5) and sampling valves (21 and 24).

7. Equipment according to any one of claims 4 to 6, wherein processing means (50) comprise a programmable controller suitable for regulating and setting a group of means connected to said controller (41), said means comprising
   a) means (1a, 2) for measuring the flow and composition of the charge,
   b) means (42, 43) for measuring the temperature of reactor (5) as well as those of heating means (6),
   c) expansion means (29),
   d) first (30) and second condensation means (37), and
   e) safety means (45).

**Patentansprüche**

1. Reihentest- und Analyseverfahren, das es ermöglicht, eine Stoffbilanz einer chemischen Reaktion während eines bestimmten Zeitintervalls aufzustellen, bei dem man in eine Reaktionszone eine Charge bekannter Zusammensetzung und bekannten Durchsatz einführt, die wenigstens ein Gas und/oder eine Flüssigkeit umfasst, man diese Charge auf eine Temperatur unter einem Reaktionsdruck grösser als dem atmosphärischen Druck in dieser Zone erwärmt, derart, daß man einen Abstrom von vollständig gasförmiger Phase enthält, wobei das Verfahren gekennzeichnet ist durch die aufeinanderfolgendenden folgenden Stufen:
   a) man entnimmt einen aliquoten bekannten Volumenteil dieses Abstrom bei dieser Temperatur und diesem Druck,
   b) man führt die Analyse dieses aliquoten Teils dieses bei dieser Temperatur und diesem Druck entnommenen Abstroms durch, wobei dieser aliquote Teil wenigstens einen Bestandteil enthält,
   c) man nimmt eine Entspannungsstufe bis auf den atmosphärischen Druck derart vor, daß man einen entspannten Abstrom erhält,
   d) man entnimmt einen bekannten aliquoten Volumenteil dieses entspannten Abstroms,
   e) man nimmt die Analyse dieses aliquoten Teils des entspannten Abstroms vor, wobei dieser aliquote Teil wenigstens zum Teil dieses Gas und/oder wenigstens zum Teil diese Flüssigkeit dieser Charge und/oder wenigstens zum Teil den Bestandteil enthält, der in dem bei dieser Temperatur und diesem Druck enthaltenen aliquoten Teil vorhanden ist,
   f) man mißt das Gesamtvolumen dieses entspannten Abstroms während dieses vorbestimmten Zeitintervalls und
   g) man leitet aus der Zusammensetzung und der Menge der Charge sowie aus der Analyse, die an dem bei dieser Temperatur und Drücken der Reaktion entnommenen Abstrom durchgeführt wurde, der Analyse des aliquoten Teils des entspannten Abstroms sowie der Messung des Volumens dieses entspannten Abstroms die Stoffbilanz dieser chemischen Reaktion her.

2. Verfahren nach Anspruch 1, dadurch gekennzeichnet, daß man nach der Entspannungsstufe eine Kondensationsstufe durchführt, die ein Kondensat liefert, das man in der Stoffbilanz berücksichtigt.

3. Verfahren nach einem der Ansprüche 1 bis 2, dadurch gekennzeichnet, daß man vor der Stufe a) eine zusätzliche Kondensationsstufe durchführt, die ein Kondensat liefert, das man qualitativ und quantitativ analysiert.

4. Reihentest- und Analysevorrichtung zur Durchführung des Verfahrens gemäß Anspruch 1, gekennzeichnet durch die folgende Kombination:
   - einen Reaktor (5),

- ein Injektionssystem (1) einer Charge, verbunden mit diesem Reaktor,
- Meßmittel (1a, 2) für Menge und Zusammensetzung dieser Charge,
- ein Heizmittel (6) dieses Reaktors, wobei letzterer einen Abstrom völlig in gasförmiger Phase liefert,
- wenigstens ein Probenahmeventil (21), das mit Heizorganen versehen ist, wobei dieses Ventil mit dem Ausgang des Reaktors (5) verbunden ist und einen aliquoten Anteil dieses Abstroms enthält,
- ein erstes Analysemittel (19), beispielsweise ein Chromatograph in gasförmiger Phase zur qualitativen und quantitativen Analyse dieses in diesem Ventil enthaltenen Abstroms, wobei das erste Analysemittel mit diesem Ventil verbunden ist,
- ein Entspannungsmittel (29) am Austritt aus dem ersten Analysemittel (19), das einen entspannten Abstrom liefert,
- ein zusätzliches Probenahmeventil (24), das mit einem Heizorgan versehen ist, und einen aliquoten Anteil des entspannten Abstroms enthält,
- ein zweites Analysemittel (19, 28), beispielsweise ein Chromatograph in gasförmiger Phase zur qualitativen und quantitativen Analyse dieses aliquoten Anteils des entspannten Abstroms, wobei dieses zweite Analysemittel mit diesem zusätzlichen Probenahmeventil verbunden ist,
- ein Mittel zur Volumenmessung (31) dieses entspannten Abstroms, das mit dem Ausgang dieses zweiten Analysemittels (19, 28) verbunden ist und
- Verarbeitungsmittel (50), die mit diesen Meßmitteln für diesen Durchsatz (1a, 2) und zur Zusammensetzung der Charge mit diesem Volumenmeßmittel (31) und diesem ersten und zweiten Analysemittel (19 und 19, 28) verbunden ist, wobei diese Verarbeitungseinrichtungen so ausgebildet sind, daß sie eine Stoffbilanz ausgehend von den Messungen von Durchsatz und Zusammensetzung der Charge, der Messung des Volumens und der Analyse dieses entspannten Abstroms sowie aus der Analyse des vollständig in gasförmiger Phase bestehenden Abstroms bestimmen.

5. Vorrichtung nach Anspruch 4, dadurch gekennzeichnet, daß sie ein erstes Kondensationsmittel (30) umfasst, das zwischen dem Entspannungsmittel (29) und dem zweiten Analysemittel (19, 28) des entspannten Abstroms angeordnet ist.

6. Vorrichtung nach einem beliebigen der Ansprüche 4 oder 5, dadurch gekennzeichnet, daß sie wenigstens ein zweites Kondensationsmittel (37) umfasst, das zwischen dem Austritt aus dem Reaktor (5) und den Probenahmeventilen (21 und 24) angeordnet ist.

7. Vorrichtung nach einem der Ansprüche 4 bis 6, dadurch gekennzeichnet, daß die Verarbeitungsmittel (50) einen programmierbaren Automaten einer Auslegung derart umfassen, daß eine Anordnung von Mittel eingestellt und geregelt wird, die mit diesem Automaten (41) verbunden sind, wobei diese Mittel umfassen:
   a) Meßmittel (1a, 2) für Durchsatz und Zusammensetzung der Charge,
   b) Meßmittel (42, 43) für die Temperatur des Reaktors (5) sowie des Heizmittels (6),
   c) Entspannungsmittel (29),
   d) das erste (30) und das zweite Kondensationsmittel (37) und
   e) Sicherheitsmittel (45).

14

FIG.1

FIG.2

**FIG.3**